# EUROPEAN PATENT APPLICATION

(11) **EP 1 175 120 A1**
(43) Date of publication of application: **23.01.2002**
(21) Application number: 01906201.7
(22) Date of filing: 22.02.2001
(51) Int. Cl.: H04Q 7/38

(54) **MOBILE STATION APPARATUS, BASE STATION APPARATUS, AND METHOD FOR ALLOTTING RADIO COMMUNICATION CHANNELS**

(30) Priority: 25.02.2000 JP 2000049848
(71) Applicant: MATSUSHITA ELECTRIC INDUSTRIAL CO., LTD., Kadoma-shi, Osaka 571-8501 (JP)
(72) Inventor: SHOJI, Takahiro, Yokohama-shi, Kanagawa 221-005 (JP); HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: JP0101290
(87) International publication number: WO0163958

(57) **Abstract**

In a mobile communication system according to a TDD method, a base station apparatus acquires a propagation loss value, which is multiplexed over dedicated channel data transmitted from a mobile station apparatus, of a downlink in a propagation loss value acquisition section 113; and performs channel assignment in a channel assignment section 114, substituting the propagation loss value of the downlink for that of the uplink.

## Description

### Technical Field

The present invention relates to a mobile station apparatus, a base station apparatus, and a radio communication channel assignment method, and, especially, to those used in a mobile communication system where radio communication channels (hereinafter, called simply as "channels") are assigned, based on the size of propagation losses.

### Background Art

As described in SHUUICHI SASAOKA: "Mobile Communication", published by Ohmsha, Ltd., pp.127 - 158, (1998), a channel assignment in a mobile communication system using a cellular system is roughly divided into two methods of a fixed channel assignment (hereinafter, called as "a fixed method" . ) , according to which channels used for each cell are determined beforehand, and of a dynamic channel assignment (hereinafter, called as "a dynamic method".), according to which channels to be assigned are changed with time in meeting the requirement of calls of each cell.

As channels used for each cell are determined beforehand, control and so on is simple in the fixed method, but the fixed method may not flexibly cope with changes in the traffic volume of each cell.

On the other hand, the dynamic method may efficiently assign channels, coping with changes in the traffic volume of each cell, as channels are assigned to each cell in meeting the requirement of calls. However, the dynamic method has complex control and so on. Especially, in order efficiently to use limited channels, efficient dynamic methods have been required along with increased demand for mobile communication in recent years.

One of efficient dynamic methods has been described in TOSHIHITO KANAI: "Autonomous Distributed Dynamic Channel Assignment (ARP) in a Micro Cell Mobile Communication System", IEICE (The Institute of Electronics, Information and Communication Engineers) Technical Report RCS91-32 (1991). In the above ARP (Autonomous Reuse Partitioning) method, channels are selected in all cells according to the same priority order common therein, and, among selected channels, channels are used in the increasing order of desired signal to interference signal power ratios starting with a channel having the above ratio equal to or larger than a predetermined threshold. The channel assignment by the ARP method is specifically performed as shown in the following. Here, a communication channel in a direction from a mobile station to a base station is called as "uplink", and, on the other hand, one in the reverse direction from a base station to a mobile station as "downlink" in the following description.
1. The levels of desired signals on uplinks, and those on downlinks are measured.
2. Unassigned channels with the highest priority are selected according to a priority order common in all base stations.
3. With regard to the selected channels, the levels of interference signals on uplinks at the side of the base stations and those of interference signals on downlinks at the side of the mobile stations are measured.
4. The selected channels are assigned, when the desired signal to interference signal power ratios of the selected channels on uplinks and those on downlinks are equal to or larger than the predetermined threshold. When one of the desired signal to interference signal power ratios of the selected channels on uplinks and those on downlinks is less the above predetermined threshold, an unassigned channel with the next highest priority is selected. Then, processing of the above items 3, 4 is repeated till termination of processing for all the channels.

When the channel assignment is performed by the above ARP method as described above, the best cell reuse factors may be set for each channel based on the distances from mobile stations to base stations, that is, on the size of the propagation losses. In other words, so-called reuse partitioning (Halpern: "Reuse Partitioning in Cellular Systems", Proc. of VTC '83, pp. 322-327 (1983)) may be realized in each cell in an autonomous distributed manner. As described above, more calls may be carried as the whole system in comparison with those of the fixed method according to the ARP method, as the best cell reuse factor is set by realization of the reuse partitioning.

Here, in a mobile communication system in which so-called transmission power control is performed on uplinks, transmission power of each mobile station is controlled in each cell so that the received quality such as a desired signal to interference signal power ratio in the base station is equal to a desired received quality.

Each base station assigning channels may not estimate the propagation losses for each mobile station, based on the power of the received signals, as transmission power is controlled on uplinks so that all signals transmitted from each mobile station in the own cell have the same received quality in each base station.

Therefore, so-called reuse partitioning, in which the best cell reuse factors are set for each channel, based on the size of the propagation losses, may not be realized, in the case of simple application of the channel assignment by the ARP method to mobile communication systems in which transmission power is controlled on uplinks.

### Disclosure of Invention

The object of the present invention is to provide a mobile station apparatus, a base station apparatus, and a radio communication channel assignment method, by which channels are dynamically assigned, based on the size of propagation losses even in a mobile communication system in which transmission power control is performed on uplinks.

The inventors of the present invention have noticed that there is little change in the characteristics of the propagation environments on uplinks and those on downlinks when the intervals between time slots of uplinks and those of downlinks are short, as uplinks and downlinks use the same frequency if a Time Division Duplex (hereinafter, called as "TDD") method, by which the same frequency band is used by timesharing on uplinks and on downlinks for communication, is adopted in a mobile communication system; and found that the propagation losses on downlinks may be substituted as those on uplinks. Then, the present invention has been made.

Then, in order to achieve the above object, it is configured in the present invention that channel assignment is performed by substitution of the propagation losses of downlinks, which are obtained from the transmitting and received power of control channel signals transmitted at predetermined power from base stations to each mobile station, for the propagation losses of uplinks.

### Brief Description of Drawings

FIG. 1 is a block diagram showing a schematic configuration of a base station apparatus according to one embodiment of the present invention.
FIG. 2 is a block diagram showing a schematic configuration of a mobile station apparatus according to one embodiment of the present invention.
FIG. 3 is a view of a configuration of a broadcast channel signal and a dedicated channel signal.
FIG. 4 is a graph showing a change in a propagation loss.
FIG. 5 is a block diagram showing a schematic configuration of another base station apparatus according to one embodiment of the present invention.
FIG. 6 is a block diagram showing a schematic configuration of another mobile station apparatus according to one embodiment of the present invention.

### Best Mode of Carrying Out the Invention

Hereinafter, embodiments of the present invention will be described, referring to drawings.

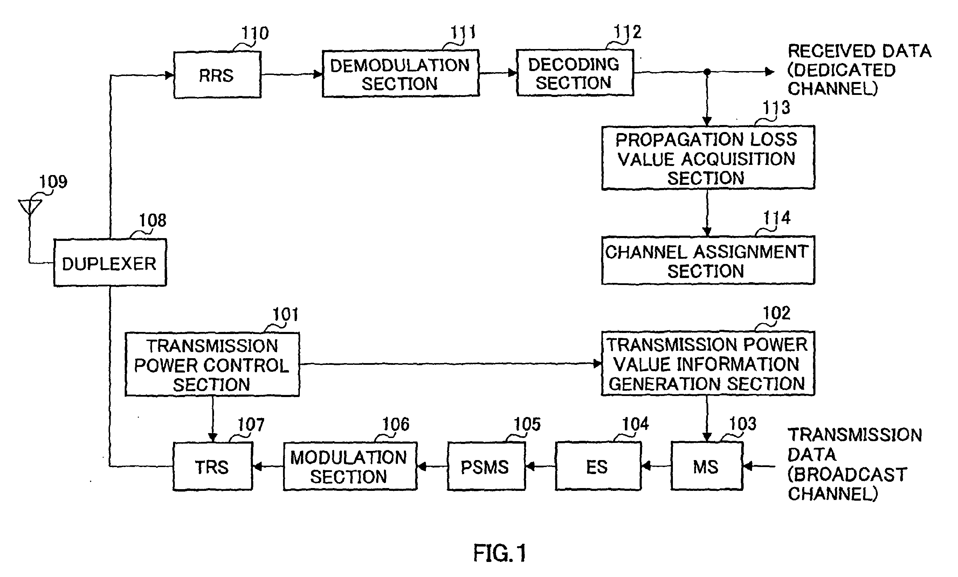

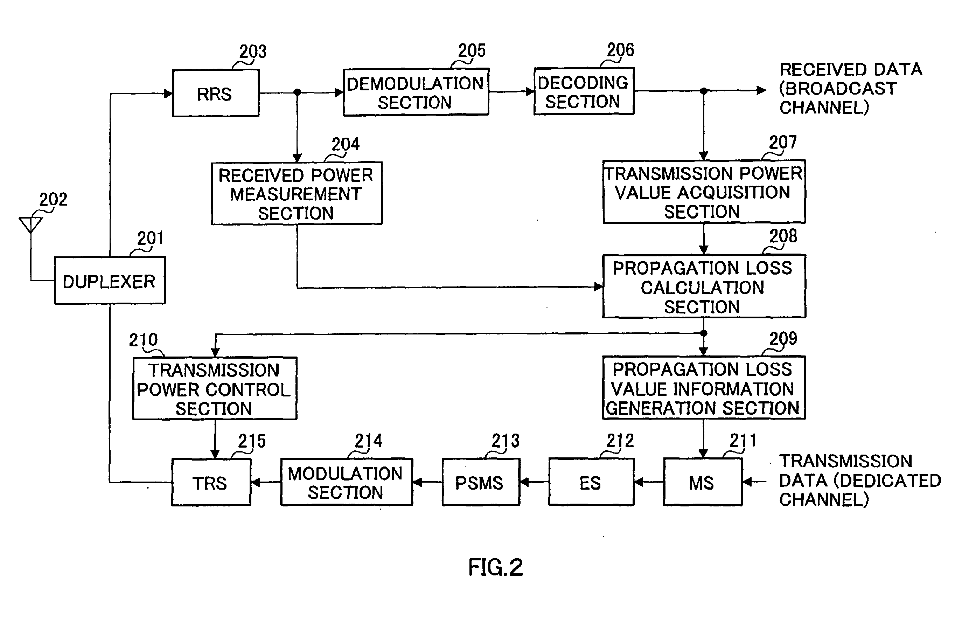

FIG. 1 is a block diagram showing a schematic configuration of a base station apparatus according to one embodiment of the present invention; and FIG. 2 is a block diagram showing a schematic configuration of a mobile station apparatus according to one embodiment of the present invention. The base station apparatus shown in FIG. 1, and the mobile station apparatus shown in FIG. 2 are applied in a mobile communication system according to a TDD method.

In the base station apparatus shown in FIG. 1, a transmission power control section 101 controls the transmission power of a broadcast channel signal to be at a predetermined transmission power value so that the broadcast channel signal may be broadcast over the whole cell which the above base station apparatus covers. A transmission power value information generation section 102 converts the transmission power value of the broadcast channel signal into information bit strings.

A multiplexing section(MS) 103 multiplexes information indicating the transmission power value over a data part of the broadcast channel signal. An encoding section(ES) 104 performs predetermined encoding processing of the broadcast channel signal. A pilot signal multiplexing section (PSMS) 105 adds a pilot signal, which is used in the mobile station apparatus for acquisition of synchronization, channel estimation and so on, to the data part of the broadcast channel signal. A modulation section 106 performs predetermined modulation processing of the broadcast channel signal. A transmission RF section(TRS) 107 amplifies the broadcast channel signal according to the control of the transmission power control section 101 for predetermined radio processing of the broadcast signal. A duplexer 108 switches transmitting and receiving of signals to be transmitted and received through an antenna 109.

A receiving RF section(RRS) 110 performs predetermined radio processing of a dedicated channel signal transmitted from the mobile station apparatus. A demodulation section 111 performs predetermined demodulation processing of the dedicated channel signal. A decoding section 112 performs predetermined decoding processing of the dedicated channel signal. Thereby, received data are obtained.

And, a propagation loss value acquisition section 113 acquires a propagation loss value, which is multiplexed on the received data, of a downlink. A channel assignment section 114 assigns a channel, substituting the above acquired propagation loss value of the downlink for that of the uplink.

On the other hand, a duplexer 201 switches transmitting and receiving of signals to be transmitted and received through an antenna 202 in the mobile station apparatus shown in FIG. 2.

A receiving RF section(RRS) 203 performs predetermined radio processing of the broadcast channel signal transmitted from the base station apparatus. A received power measurement section 204 measures the received power of the broadcast channel signal. A demodulation section 205 performs predetermined demodulation processing of the broadcast channel signal. A decoding section 206 performs predetermined decoding processing of the broadcast channel signal. Thereby, received data are obtained.

A transmission power value acquisition section 207 acquires a transmission power value, which is multiplexed on the received data, of the broadcast channel signal. A propagation loss calculation section 208 calculates the propagation loss value, using the transmission power value and the received power value of the broadcast channel signal.

A propagation loss value information generation section 209 converts the propagation loss value into information bit strings. A transmission power control section 210 controls the transmission power of the dedicated channel signal according to the propagation loss.

A multiplexing section(MS) 211 multiplexes information indicating the propagation loss value over the data part of the dedicated channel signal. An encoding section(ES) 212 performs predetermined encoding processing of the dedicated channel signal. A pilot signal multiplexing section (PSMS) 213 adds a pilot signal, which is used in the base station apparatus for acquisition of synchronization, channel estimation and so on, to the data part of the dedicated channel signal. A modulation section 214 performs predetermined modulation processing of the dedicated channel signal. A transmission RF section(TRS) 215 amplifies the dedicated channel signal according to the control by the transmission power control section 210 for predetermined radio processing of the dedicated channel signal.

Then, operations of the base station apparatus and the mobile station apparatus with the above configurations will be described.

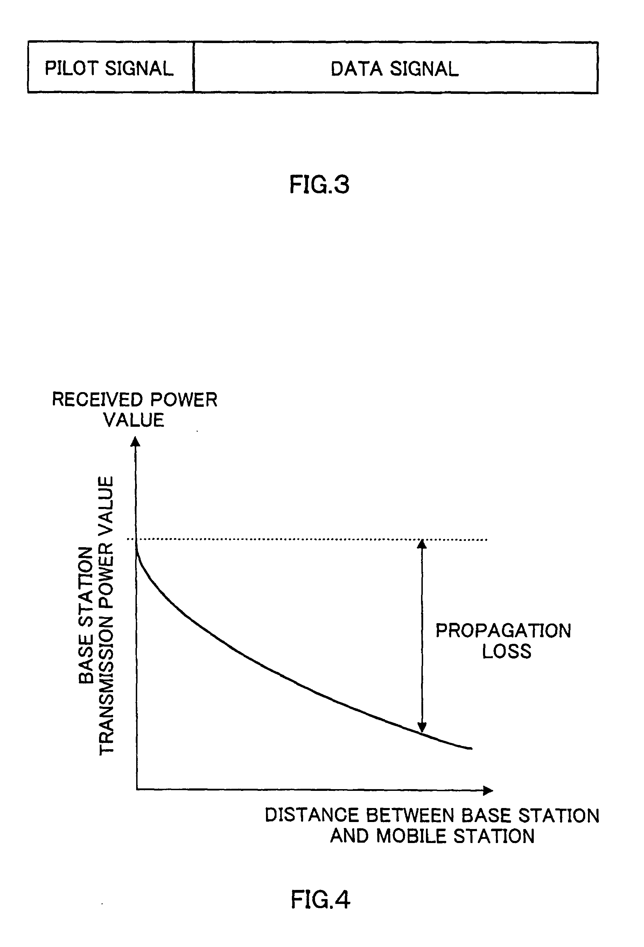

FIG. 3 is a view of a configuration of the broadcast channel signal and the dedicated channel signal, and, FIG. 4 is a graph showing a change in the propagation loss.

In the base station apparatus shown in FIG. 1, the broadcast channel signal are transmitted, using the downlink, in order to broadcast information for specification of the cell, in which a mobile station is located, to all mobile stations existing in the cell which the base station covers. And, the transmission power of the broadcast channel signal is controlled to be at a predetermined value so that the broadcast channel signal may be transmitted to the whole cell.

Here, a signal indicating the above predetermined transmission power value is generated first by the transmission power control section 101, and output to the transmission power value information generation section 102 and the transmission RF section(TRS) 107.

In the transmission power value information generation section 102, the signal indicating the transmission power value of the broadcast channel signal is converted into information bit strings for output to the multiplexing section(MS) 103. The information indicating the transmission power value is multiplexed in the multiplexing section(MS) 103 over transmission data including information for specification of the cell, and so on. That is, the information indicating the transmission power value is multiplexed over the data part, shown in FIG. 3, of the broadcast channel signal, and transmitted to each mobile station.

The predetermined encoding processing of the broadcast channel signal output from the multiplexing section(MS) 103 is performed in the encoding section(ES) 104, and predetermined modulation processing thereof is performed in the modulation section 106 after addition of pilot parts as shown in FIG. 3 in the pilot signal multiplexing section(PSMS) 105. Here, the pilot signals are known signal both in the base station apparatus and the mobile station apparatus.

Then, the broadcast channel signal output from the modulation section 106 is transmitted to the mobile station apparatus through the duplexer 108 and the antenna 109 after amplification of the transmission power of the above signal to the above predetermined transmission power in the transmission RF section(TRS) 107.

In the mobile station apparatus shown in FIG. 2, the cell, where the mobile station is currently located, and so on. are specified at power-on by reference to the broadcast channel signal after establishment of synchronization by a synchronous channel signal.

And, the broadcast channel signal transmitted from the base station apparatus are received through the antenna 202 and the duplexer 201 in the mobile station apparatus shown in FIG. 2.

Predetermined radio processing of the broadcast channel signal, which is received when there is generated a request for channel assignment, is performed in the receiving RF section(RRS) 203, and the above signal is output to the received power measurement section 204, and a demodulation section 205.

Predetermined decoding processing of the broadcast channel signal output from the receiving RF section(RRS) 203 is performed in the decoding section 206 after predetermined demodulation processing in the demodulation section 205. Thereby, received data are obtained.

On the other hand, in the received power measurement section 204, the received power value of the pilot section in the broadcast channel signal is measured, and output to the propagation loss calculation section 208. And, in the transmission power value acquisition section 207, the transmission power value, which is multiplexed in the base station apparatus over the data part of the broadcast channel signal, of the broadcast channel signal is fetched from the data part, and output to the propagation loss calculation section 208.

In the propagation loss calculation section 208, the propagation loss value of the downlink is calculated, using the transmission power value output from the transmission power value acquisition section 207, and the received power value output from the received power measurement section 204. Specifically, for example, the propagation loss calculation section 208 calculates propagation loss value of the downlink by subtraction of the received power value output from the received power measurement section 204 from the transmission power value output from the transmission power value acquisition section 207.

The longer distance between the base station and the mobile station causes the more reduced received power value of the broadcast channel signal as shown in FIG. 4, as the broadcast channel signal is transmitted from the base station to all mobile stations at predetermined power. Therefore, the propagation loss of the downlink at each mobile station is calculated in each mobile station, using the transmission power value and the received power value of the broadcast channel signal. In other words, the distance between the base station and the mobile station is calculated in each mobile station. The signal indicating the propagation loss value of the downlink is output to the propagation loss value information generation section 209 and the transmission power control section 210.

In the propagation loss value information generation section 209, the signal indicating the propagation loss value of the downlink are converted into information bit strings, and output to the multiplexing section(MS) 211. The information indicating the propagation loss value of the downlink is multiplexed over the transmission data in the multiplexing section(MS) 211. That is, the information indicating the propagation loss value of the downlink is multiplexed over the data part shown in FIG. 3 of the dedicated channel signal, and transmitted to the base station apparatus.

Predetermined encoding processing of the dedicated channel signal output from the multiplexing section(MS) 211 is performed in the encoding section(ES) 212, and predetermined modulation processing of the dedicated channel signal is performed in the modulation section 214, after addition of the pilot part by the pilot signal multiplexing section(PSMS) 213 as shown in FIG. 3.

In the transmission power control section 210, a value after addition of the calculated propagation loss value to the desired received power value in the base station is calculated as a transmission power value of the dedicated channel signal. And, the dedicated channel signal output from the modulation section 214 is transmitted to the base station apparatus through the duplexer 201 and the antenna 202, after the above channel signal is amplified so that the transmission power value of the above channel signal becomes the one calculated in the transmission power control section 210 in the transmission RF section(TRS) 215. That is, transmission power control of the dedicated channel signal is performed in each mobile station so that all received power values become the same in the base station apparatus.

Subsequently, in the base station apparatus shown in FIG. 1, predetermined radio processing of the dedicated channel signal received through the antenna 109 and the duplexer 108 is performed in the receiving RF section (RRS) 110, and predetermined decoding processing thereof is performed in the decoding section 112 after predetermined demodulation processing thereof at the demodulation section 111. Thereby, received data are obtained.

Here, all the received power values of the dedicated channel signals transmitted from each mobile station in the own cell become equal in the base station, when the transmission power control is performed on the uplinks as described above. Therefore, the base station assigning channels may not estimate propagation losses of the uplinks for each mobile station.

However, there is not very much change in the characteristics of the propagation environments between the uplinks and the downlinks in the case of short intervals between time slots for the uplinks and the downlinks, as the same frequency is used for uplinks and downlinks in the mobile communication system according to the TDD method. In other words, it is possible to substitute the propagation losses of the downlinks for those of the uplinks.

Then, the propagation loss value, which is multiplexed over the data part of the dedicated channel signal in the mobile station apparatus, of the downlink is fetched from the data part by the propagation loss value acquisition section 113 for output to the channel assignment section 114, when requests for channel assignment are caused at outgoing calls or incoming ones. Thereafter, the channel assignment is performed in the channel assignment section 114, substituting the propagation loss values of the downlinks for the propagation loss values of the uplinks.

The channel assignment is performed as specifically described in the following.

That is,
1. An unassigned channel with the highest priority is selected according to a common priority order for all base stations.
2. The propagation loss value of the selected channel (that is, the propagation loss value of the downlink substituted for that of the uplink) and a predetermined threshold are compared.
3. The selected channel is assigned, when the propagation loss value is less than the predetermined threshold. On the other hand, an unassigned channel with the next highest priority is selected, when the propagation loss value is equal to or larger than the predetermined threshold. And, the processing of the above items 2 and 3 is repeated until operations for all channels are terminated.
4. When the propagation loss values of all channels are equal to or larger than the predetermined threshold, the call loss is assumed to be caused.

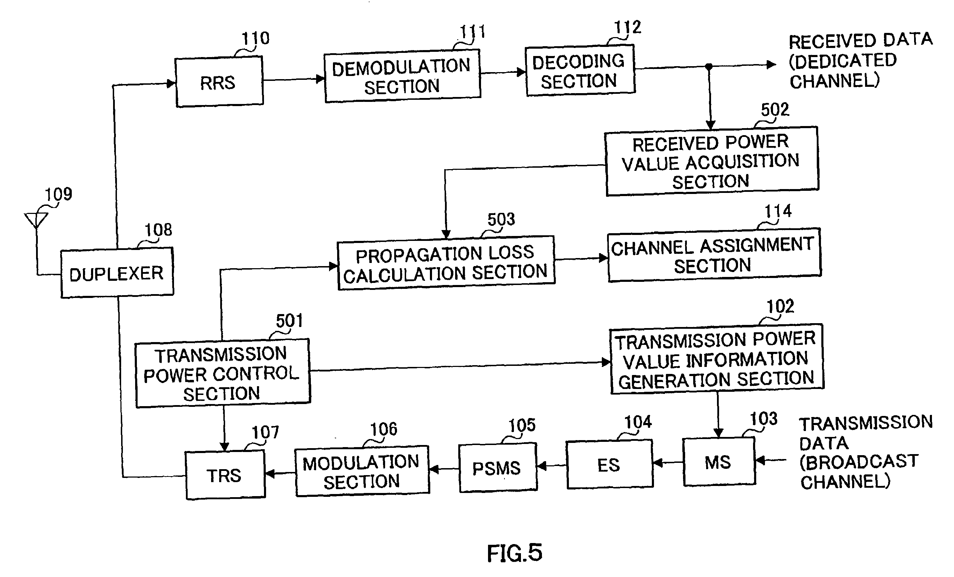

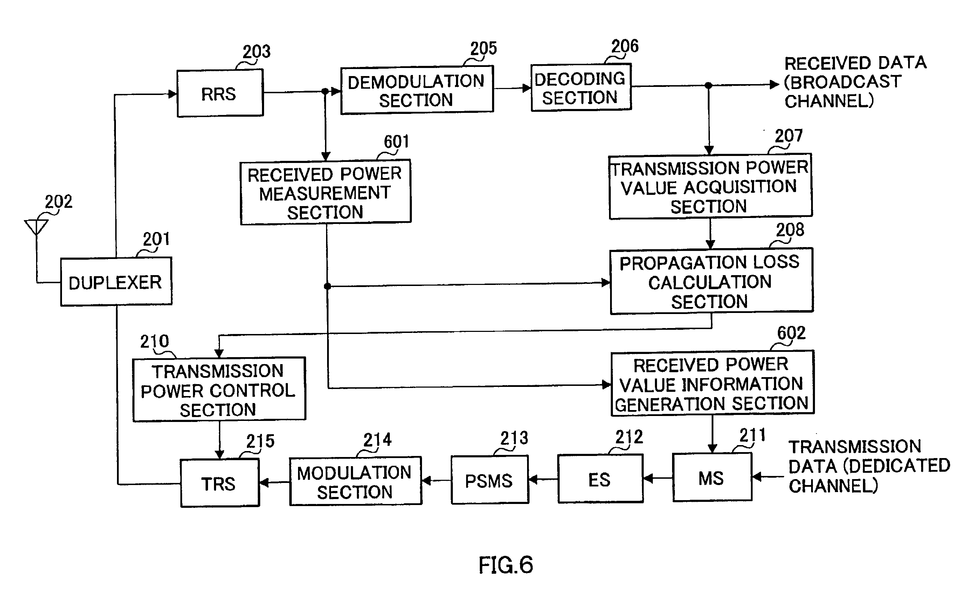

Here, it has been assumed in the above description that the mobile station apparatus is configured to obtain the propagation loss values of the downlinks, and to transmit the above values to the base station apparatus. However, the base station apparatus and the mobile station apparatus may be configured as shown in FIG. 5 and FIG. 6, in which the base station apparatus obtains the propagation loss values of the downlinks.

FIG. 5 is a block diagram showing a schematic configuration of another base station apparatus according to one embodiment of the present invention, and FIG. 6 is a block diagram showing a schematic configuration of another mobile station apparatus according to one embodiment of the present invention. Here, parts similar to those of the base station apparatus shown in FIG. 1 and to those of the mobile station apparatus shown in FIG. 2 are denoted by the same reference numerals as those in FIG. 1 and FIG. 2, and detailed description will be eliminated.

In the base station apparatus shown in FIG. 5, a transmission power control section 501 controls the transmission power of a broadcast channel signal to be at a predetermined value of transmission power so that the broadcast channel signal may be broadcast over the whole cell which the base station apparatus covers . And, the transmission power control section 501 generates a signal indicating the above predetermined transmission power value for output to a propagation loss calculation section 503, a transmission power value information generation section 102, and a transmission RF section(TRS) 107.

A received power value acquisition section 502 acquires the received power value, which is measured and multiplexed over the received data in the mobile station apparatus, of the broadcast channel signal. The propagation loss calculation section 503 calculates a propagation loss value, using the transmission power value and the received power value of the broadcast channel signal.

On the other hand, a received power measurement section 601 measures the received power of the broadcast channel signal, and outputs a signal indicating the received power value to a received power value information generation section 602 and a propagation loss calculation section 208, in the mobile station apparatus shown in FIG. 6. The received power value information generation section 602 converts the received power value, which is measured in the received power measurement section 601, of the broadcast channel signal into information bit strings.

Then, operations of the base station apparatus and the mobile station apparatus, which have the above configuration, will be described. In the first place, in the received power measurement section 601 of the mobile station apparatus shown in FIG. 6, the received power value of the pilot section in the broadcast channel signal is measured, and output to the received power value information generation section 602.

In the received power value information generation section 602, the signal indicating the received power value of the broadcast channel signal is converted into an information bit string, and output to a multiplexing section(MS) 211. The information indicating the received power value of the broadcast channel signal is multiplexed over the transmission data in the multiplexing section(MS) 211. That is, the information indicating the received power value of the broadcast channel signal is multiplexed over the data part shown in FIG. 3 of the dedicated channel signal and transmitted to the base station apparatus.

On the other hand, the received power value of the broadcast channel signal, which is multiplexed over the data part of the dedicated channel signal, is fetched in the received power value acquisition section 502, and output to the propagation loss calculation section 503, in the base station apparatus shown in FIG. 5. And, the signal indicating the predetermined transmission power value of the broadcast channel signal is output from the transmission power control section 501 to the propagation loss calculation section 503.

In the propagation loss calculation section 503, the propagation loss value of the downlink is calculated, using the transmission power value output from the transmission power control section 501 and the received power value output from the received power value acquisition section 502. Specifically, for example, the propagation loss calculation section 503 calculates propagation loss values of the downlink by subtraction of the received power value output from the received power value acquisition section 502 from the transmission power value output from the transmission power control section 501. The signal indicating the propagation loss value of the downlink is output to a channel assignment section 114.

Then, channel assignment is performed in the channel assignment section 114, substituting the propagation loss value of the downlink for that of the uplink.

Here, it has been configured in the above description that the channel assignment section 114 performs the channel assignment, using the propagation loss value as it is. However, the channel assignment section 114 may assign channels by using a value, which is obtained based on the propagation loss value and indicates the communication channel quality (for example, desired signal to interference signal power ratio and so on), as described in the following. That is,
1. An unassigned channel with the highest priority is selected according to a common priority order for all base stations.
2. Comparison between the value indicating the communication channel quality of the selected channel and the predetermined threshold is performed.
3. When the value indicating the communication channel quality is equal to or larger than the predetermined threshold, the selected channels are assigned. On the other hand, when the value indicating the communication channel quality is less than the predetermined threshold, an unassigned channel with the next highest priority is selected. And, the processing of the above items 2 and 3 is repeated until operations for all channels are terminated.
4. When the values indicating the communication channel quality for all channels are less than the predetermined threshold, the call loss is assumed to be caused.

Here, the ARP method has been used as a channel assignment method in the above description, but there is no limitation to the above assignment method, and any methods, which perform the channel assignment based on the value indicating the propagation loss value, or the communication channel quality, may be used as the above assignment method.

And, broadcast channel signals have been used for control channel signals, which are transmitted at a predetermined power, on downlinks in the above description, but there is no limitation to the above control channel signals, and any control channel signals, which are transmitted at a predetermined power on the downlinks, may be used as the above control channel signals.

Further, it has been configured in the above description that pilot signals are added to data signals, but there is no limitation to the above configuration, and a configuration, in which the pilot signals are transmitted through another channel different from the one for the data signals, may be used.

As described above, according to the present invention, the channel assignment is performed substituting the propagation loss of the downlinks obtained from the transmitting power and received power of control channel signals transmitted at a predetermined power from the base station to each mobile station for the propagation loss of the uplinks. Thereby, it is possible to realize so-called reuse partitioning by which the best cell reuse factor is set for each channel, based on the size of the propagation losses, in a mobile communication system, in which the transmission power control is performed on the uplinks, according to the TDD method. In other words, according to the present invention, it is possible to dynamically perform the channel assignment based on the size of the propagation losses, even in a mobile communication system in which the transmission power control is performed on the uplinks.

The present description is based on Japanese published application No. 2000-049848, filed on Feb. 25, 2000, the entire contents of which are incorporated herein by reference.

## Claims

1. A mobile station apparatus used in a mobile communication system according to a TDD method, comprising:
a measurer for measuring a received power value of a control channel signal transmitted from a base station apparatus at predetermined power;
a calculator for calculating a propagation loss value of a downlink, using a transmission power value and the received power value of the control channel signal; and
a transmitter for transmitting the propagation loss value to the base station apparatus.

2. The mobile station apparatus according to claim 1, wherein
said measurer measures a received power value of a known signal included in the control channel signal at outgoing calls or incoming ones.

3. A base station apparatus used in a mobile communication system according to a TDD method, comprising:
an acquirer for acquiring the propagation loss value of the downlink transmitted from said mobile station apparatus according to claim 1; and
a channel assignor for assigning a radio communication channel based on the propagation loss value.

4. A mobile station apparatus used in a mobile communication system according to a TDD method, comprising:
a measurer for measuring a received power value of a control channel signal transmitted from a base station apparatus at predetermined power; and
a transmitter for transmitting said the received power value to said base station apparatus.

5. The mobile station apparatus according to claim 4, wherein
said measurer measures a received power value of a known signal included in the control channel signal at outgoing calls or incoming ones.

6. A base station apparatus used in a mobile communication system according to a TDD method, comprising:
an acquirer for acquiring the received power value transmitted from said mobile station apparatus according to claim 4;
a calculator for calculating a propagation loss value of a downlink, using a transmission power value and the received power value of the control channel signal; and
a channel assignor for assigning a radio communication channel based on the propagation loss value.

7. A radio communication channel assignment method in a mobile communication system according to a TDD method, wherein
a mobile station apparatus calculates a propagation loss value of a downlink, and transmits the propagation loss value to a base station apparatus; and
the base station apparatus assigns a radio communication channel based on the propagation loss value of the downlink.

8. A radio communication channel assignment method in a mobile communication system according to a TDD method, wherein
a mobile station apparatus measures a received power value of a control channel signal, and transmits the received power value to a base station apparatus; and
the base station apparatus calculates a propagation loss value of a downlink using a transmission power value and the received power value of the control channel signal, and assigns a radio communication channel based on the propagation loss value.
